# EUROPÄISCHE PATENTSCHRIFT

(11) **EP 2 907 385 B1**
(45) Veröffentlichungstag und Bekanntmachung des Hinweises auf die Patenterteilung: **11.11.2020**
(21) Anmeldenummer: 15401002.9
(22) Anmeldetag: 09.02.2015
(51) Int. Cl.: A01M 7/00

(54) **Feldspritze und Verfahren zum Betreiben einer Feldspritze**
Field spraying device and method for operating same
Pulvérisateur à cultures et procédé de fonctionnement d'un pulvérisateur à cultures

(30) Priorität: 14.02.2014 DE 102014101866
(43) Veröffentlichungstag der Anmeldung: 19.08.2015
(73) Patentinhaber: Amazonen-Werke H. Dreyer GmbH & Co. KG, 49205 Hasbergen (DE)
(72) Erfinder: Austermann, Stefan, 48291 Telgte (DE)

(56) Entgegenhaltungen:
- EP-A1- 2 559 332
- EP-A2- 2 522 207
- DE-A1- 10 113 039
- US-A1- 2011 282 554

## Beschreibung

Die Erfindung betrifft eine Feldspritze mit einem Verteilergestänge und einen Rahmen, an dem das Verteilergestänge bewegbar aufgehängt ist.

### Solche Feldspritzen sind bereits aus dem Stand der Technik bekannt

Aufgrund immer größerer Arbeitsbreiten von Feldspritzen und damit einhergehenden Verbreiterungen der Verteilergestänge werden die Belastungen durch Trägheitskräfte beispielsweise bei Kurvenfahrt (zum Beispiel beim Einbiegen in ein Vorgewende), die auf das Verteilergestänge wirken, größer. Insbesondere können Belastungsspitzen auftreten, die das Gestänge, besonders tragende Teile des Gestänges, stark beanspruchen, was zur schnelleren Abnutzung oder sogar Beschädigung, letztlich bis zu ihrem Versagen führen kann.

Um das Gestänge ruhiger zu halten und die Bewegungen abzufedern bzw. zu dämpfen wurden im Stand der Technik bereits diverse Lösungen vorgeschlagen.

So zeigt die DE 100 54 285 die Erfassung der Auslenkung eines Verteilergestänges aus der Ruhelage und Ansteuerung aktiver Stellglieder, um einer Pendelbewegung des Verteilergestänges um eine aufrechte Achse entgegenzuwirken.

Die DE 10 2007 025 751 beschreibt die Erfassung einer Auslenkung des Verteilergestänges aus der Ruhelage und Ansteuerung aktiver Stellglieder, um der Pendelbewegung des Verteilergestänges um eine in Fahrtrichtung verlaufende Achse entgegenzuwirken. Als Beispiel sind Sensoren in den Endbereichen des Verteilergestänges angeordnet, die den Abstand zur zu behandelnden Fläche ermitteln.

Die EP 2 522 207 offenbart eine automatische Beschränkung der maximalen Fahrgeschwindigkeit in Kurven entsprechend dem Lenkwinkel der Laufräder des Zugfahrzeugs.

Aus der EP 2 526 755 sind ansteuerbare Dämpfungselemente zwischen der Verteilmaschine und dem Verteilergestänge bekannt, die zum Erreichen einer ruhigen Gestängelage dienen.

Die EP-A1-2 559 332 offenbart eine Feldspritze beziehungsweise ein Verfahren nach den Oberbegriffen der Ansprüche 1 und 6.

Es gibt also verschieden Vorschläge zur Dämpfung und zum Kräfteausgleich beispielsweise in Form von Federn oder Hydraulikelementen, die aber Belastungsspitzen oberhalb einer bestimmten Grenze nicht vollständig abfangen können. Außerdem unterliegen diese Dämpfungsbauteile ebenfalls einem Verschleiß und werden abhängig von der Belastung mehr oder weniger schnell abgenutzt.

Es ist also eine Aufgabe der Erfindung, es zu ermöglichen, dass die Haltbarkeit der Bauteile eines Verteilergestänges verbessert wird.

Die Aufgabe wird bei einer Feldspritze der eingangs genannten Art erfindungsgemäß dadurch gelöst, dass sie einen Sensor zum Bestimmen und Abgeben eines Werts für die mechanische Belastung auf das Verteilergestänge und eine Ausgabeeinrichtung zum Ausgeben eines Signals, das auf dem Wert für die mechanische Belastung basiert, umfasst.

Erfindungsgemäß wird also ein Sensor vorgesehen, der beim Auftreten einer mechanischen Belastung, insbesondere einer Belastungsspitze, auf das Gestänge, wie beispielsweise Beschleunigung, den Wert dieser mechanischen Belastung erfasst. Dieser Wert wird dann an eine Ausgabeeinrichtung z.B. in die Schlepperkabine weitergeleitet, so dass der Fahrer erkennt, dass durch seine Fahrweise eine außerordentliche Belastung aufgetreten ist. Er kann daher seine Fahrweise entsprechend anpassen und die Geschwindigkeit verringern, um weitere Spitzen zu verhindern und damit die Belastung zu reduzieren. Die Ausgabeeinrichtung kann zum optischen und/oder akustischen Ausgeben des Signals und/oder zum Ausgeben des Signals mittels Vibration ausgebildet sein. Sie kann insbesondere einen Bildschirm, eine Leuchteinrichtung, einen Lautsprecher und/oder ein Vibrationselement umfassen. Insbesondere kann ein Bildschirm eine Skala anzeigen und auf der Skala den aktuellen Wert der mechanischen Belastung anzeigen. Alternativ oder zusätzlich kann eine Warnleuchte angebracht sein, die leuchtet, wenn der Wert für die mechanische Belastung oberhalb eines bestimmten Grenzwerts liegt. Sie kann gegebenenfalls basierend auf der Überschreitung verschiedener Grenzwerte in verschiedenen Farben leuchten. Ein Vibrationselement kann die Vibrationsintensität verstärken, wenn die mechanische Belastung höher wird. Ein Lautsprecher kann einen Warnton ausgeben, wenn ein Grenzwert überschritten wird. Der Warnton kann zusätzlich mit zunehmender mechanischer Belastung lauter werden. Dadurch kann der Betreiber (z.B. Fahrer) der Feldspritze unmittelbar erkennen, ob sein Fahrstil, zum Beispiel die Fahrgeschwindigkeit, an die Situation angepasst ist.

Das Sensorsignal kann auf verschiedenste Weise, z.B. drahtgebunden und/oder drahtlos über gängige Übertragungsmittel wie Infrarot, Ultraschall, Bluetooth oder dergleichen Technologien an die Ausgabeeinrichtung übermittelt werden.

Zum Speichern des Werts für die mechanische Belastung kann eine Speichereinrichtung vorgesehen sein. Insbesondere kann sie zum Abspeichern des Werts zusammen mit Informationen, wie beispielsweise Datum, Zeit, Position (beispielsweise GPS Daten), Fahrgeschwindigkeit und/oder Motordrehzahl, ausgebildet sein. Dies ermöglicht einen späteren Zugriff auf die Daten, so dass die Ursachen für die mechanische Belastung und Verschleiß bestimmt und eventuell ausgewertet werden können. So kann der Fahrer in Zukunft seinen Fahrstil anpassen. Es kann zudem im Nachhinein ausgewertet werden, welcher Fahrstil, beispielsweise Geschwindigkeit (besonders Kurvengeschwindigkeit), Beschleunigung und/oder Kurvenradius, angemessen sind, beispielsweise in Abhängigkeit von Eigenschaften des befahrenen Felds und der Bodenbeschaffenheit. Zudem ist es möglich, mittels geeigneter Ausgabemittel für den Fahrer verbesserte Informationen zur Anpassung der Fahrweise und/oder Fahrgeschwindigkeit anzugeben und/oder anzuzeigen.

Die Feldspritze kann eine Datenverarbeitungseinrichtung, mit der der Sensor drahtlos und/oder drahtgebunden verbunden ist, zum Berechnen des Werts für die mechanische Belastung aus Messwerten des Sensors und/oder zum Addieren mit bereits bestehenden Werten für die mechanische Belastung und/oder zum Vergleichen von Werten für die mechanische Belastung mit einem Grenzwert für die mechanische Belastung und/oder mit bereits bestehenden Werten für die mechanische Belastung, umfassen.

So kann beispielsweise aus direkten Messgrößen, wie beispielsweise GPS-Koordinaten und Geschwindigkeit oder Lenkwinkel und Geschwindigkeit, eine Vergleichsgröße errechnet werden, die die mechanische Belastung wiedergibt. Außerdem kann durch Aufsummieren der Werte für die mechanische Belastung ein Verschleißzustand des Verteilergestänges abgeschätzt werden. Durch einen Vergleich mit Grenzwerten oder bereits bestehenden Werten kann beispielsweise ein Warnsignal erzeugt werden bevor die Belastungsspitze tatsächlich auftritt. Die Datenverarbeitungseinrichtung kann mit dem Speicher und/oder mit der Signalausgabeeinrichtung drahtlos und/oder drahtgebunden verbunden sein.

Der Sensor kann am Verteilergestänge, insbesondere auch an Dämpfungselementen des Verteilergestänges, und/oder an der als Deichsel ausgebildeten Kupplungsstange und/oder im Motor und/oder im Tank angeordnet sein. Der Sensor kann einen oder mehrere der folgenden Sensoren umfassen: einen Wegsensor, einen Beschleunigungssensor, einen Dehnungssensor, einen Drehmomentsensor, einen Drehratensensor, einen Drucksensor, einen Füllstandssensor, einen Geschwindigkeitssensor, einen Kraftsensor, einen Lagesensor, einen Winkelsensor und einen Lenkwinkelsensor.

Den oben genannten Sensoren können neben mechanischen Prinzipien auch optische, elektrische, magnetische, optoelektronische und/oder piezoelektrische Prinzipien zugrunde liegen. Der Dehnungssensor kann in Form eines beispielsweise auf mechanische oder optischer Weise funktionierender und/oder basierender Dehnungsmessstreifens ausgebildet sein und dient beispielsweise zum Messen von Verformungen. Er kann auch nach einem piezoelektrischen, magnetoelastischen und/oder dem optischen Prinzip funktionieren und/oder als Kraftsensor ausgestaltet sein.

Der Kraftsensor kann z.B. mittels Verformung eines Federkörpers eine Kraft messen. Der Lagesensor kann zum Messen einer Position ausgebildet sein, beispielsweise mittels GPS Koordinaten. Alternativ oder zusätzlich kann der Lagesensor ein Magnetometer umfassen. Der Winkelsensor kann in Form eines Neigungsmessers, beispielsweise bezogen auf die Schwerkraft, ausgebildet sein. Insbesondere kann ein Drucksensor in der Hydraulik eines Dämpfungselements und/oder stellt Elementes angeordnet sein.

Alternativ oder zusätzlich kann ein Wegsensor an Federelementen des Verteilergestänges vorgesehen sein. Ein Lenkwinkelsensor und/oder Drehratensensor kann an einer als Deichsel ausgebildeten Kupplungsstange zwischen einem Zugfahrzeug und einem Anhänger, an dem die Halterung befestigt ist, oder an einem der Räder des Zugfahrzeugs und/oder des Anhängers angeordnet sein. Wenn die Feldspritze selbstfahrend ist, kann der Lenkwinkelsensor an einem ihrer Räder zur Messung des Lenkwinkelausschlages angeordnet sein. Drehratensensor kann ein Sensor zum Messen der Ausgangsdrehzahl des Motorgetriebes sein, der indirekt auch die Fahrgeschwindigkeit misst.

Vorteile der Merkmale, die bereits im Zusammenhang mit den Vorrichtungsmerkmalen beschrieben wurden, gelten ebenfalls für das erfindungsgemäße Verfahren.

Das erfindungsgemäße Verfahren zum Betreiben einer Feldspritze sieht vor, dass mittels eines Sensors, insbesondere kontinuierlich oder in vorgegebenen Zeitintervallen, der Wert für die mechanische Belastung auf das Verteilergestänge der Feldspritze bestimmt und abgegeben wird und ein Signal, das auf dem Wert5 für die mechanische Belastung basiert, mittels einer Ausgabeeinrichtung ausgegeben wird. Der Wert für die mechanische Belastung kann drahtgebunden und/oder drahtlos an die Ausgabeeinrichtung abgegeben werden. Der Wert kann unmittelbar oder über eine Datenverarbeitungseinrichtung an die Ausgabeeinrichtung abgegeben werden.

Der Wert für die mechanische Belastung kann gespeichert werden, vorzugsweise zusammen mit zuvor gemessenen Werten für die mechanische Belastung, insbesondere als Summe aller gemessenen Werte für die mechanische Belastung. Alternativ oder zusätzlich kann der Wert zusammen mit Informationen, wie beispielsweise Datum, Zeit, Position (beispielsweise GPS Daten), Fahrgeschwindigkeit und/oder Motordrehzahl abgespeichert werden.

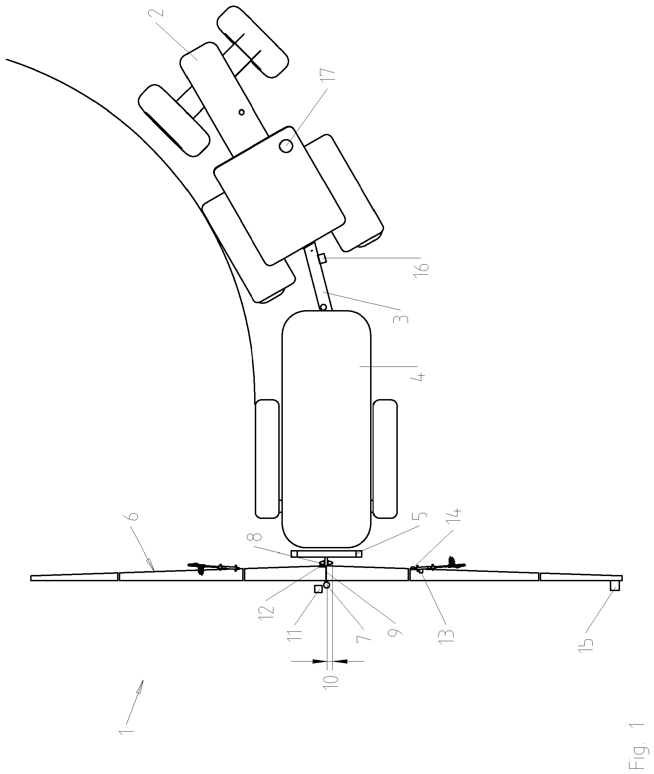

Die Merkmale und Vorteile der Erfindung werden nachfolgend anhand der einzigen Figur weiter erläutert.

Die Figur zeigt eine schematische, nicht maßstabsgetreue Draufsicht auf eine Feldspritze 1. Die Feldspritze umfasst das Zugfahrzeug 2, das über eine Kupplungsstange 3 mit einem Anhänger 4 verbunden ist, sowie einen Vorratsbehälter, einen Rahmen 5, der am Anhänger angebracht ist und ein Verteilergestänge 6 trägt. Außerdem ist in der Figur das Drehlager 7 der Verteilergestängeaufhängung, ein Parabelpuffer (Federelemente) 8, die Achse der Verteilergestängeaufhängung 9 und der Federweg 10 gezeigt. Das Verteilergestänge ist gefedert und drehbar aufgehängt, wie dies an sich bekannt ist und daher hier nicht näher beschrieben.

In der Figur wurden nun der Einfachheit halber die verschieden Möglichkeiten zur Ausbildung und Anordnung der Sensoren zur Erfassung der Belastung des Verteilergestänges 6 eingezeichnet, wobei es sich versteht, dass zweckmäßiger Weise jeweils nur ein Sensor verwendet wird, obwohl es natürlich auch nicht ausgeschlossen ist zwei oder mehrere derartige Sensoren zu verwenden.

So ist in der Figur ein auf Höhe der Achse der Verteilergestängeaufhängung angeordneter Drehmomentsensor 11 gezeigt, der an dem Verteilergestänge 6 befestigt ist. Dieser dient zum Detektieren der bei einer Auslenkung in bzw. gegen die Fahrtrichtung auf das Gestänge wirkenden Kräfte.

Des Weiteren ist ein Dehnungssensor 12 angedeutet, der einen Wert für die Dehnung der Federelemente bestimmt und somit Auslenkungen aus der Horizontale berücksichtigt. Hierbei wird von dem als Weg- oder Kraftsensor ausgebildeten Sensor dieser Wert in einfacher Weise ermittelt.

Auch der Einsatz eines Drucksensors 13 und eines Kraftsensors 14 ist möglich, die jeweils Druck bzw. Kraft auf Federelemente des Verteilergestänges messen, die von der Verteilergestängeaufhängung beabstandet angeordnet sind.

Des Weiteren ist ein Beschleunigungssensor 15 angedeutet, der zum äußeren Ende des Verteilergestänges 6 hin angeordnet ist und die Beschleunigung erfassen kann, was insbesondere zur Erfassung der Beschleunigungskräfte bei Kurvenfahrt vorteilhaft ist. Auch kann der Beschleunigungssensor direkt an der verteilen Maschine oder im mittleren Bereich des Gestänge angeordnet sein.

Auch könnte ein Sensor 16 an der Kupplungsstange angebracht sein, der den Lenkwinkel oder die Drehrate misst.

Wie erwähnt, kann eine Feldspritze einen, mehrere oder alle der oben beschriebenen Sensoren umfassen.

Eine Ausgabeeinrichtung ist vorzugsweise drahtlos mit dem bzw. den Sensoren verbunden. Je nach Art und Anordnung des Sensors kann auch eine drahtgebundene Verbindung zweckmäßig sein. Die Ausgabeeinrichtung ist bevorzugt in der Fahrerkabine des Traktors 2 angeordnet und in diesem Fall in Form einer Warnleuchte 17 ausgebildet. Auch eine vom Traktor 2 und Anhänger beabstandete Ausgabeeinrichtung (Terminal) kann vorgesehen sein, an das das Signal übertragen wird, z.B. auf den Hof des Landwirtes, so dass von dort zentral die mechanische Belastung überwacht werden kann.

Im Folgenden wird ein Ausführungsbeispiel für ein Verfahren beschrieben, wobei hier eine Feldspritze 1 mit einem Drehmomentsensor 11 und einem Dehnungssensor 12 beschrieben ist. Die Feldspritze wird betrieben und fährt in diesem Fall auf einem Feld. Die beiden Sensoren sind wie oben beschrieben angeordnet und messen beispielsweise im Sekundentakt die jeweiligen Werte für die mechanische Belastung, in diesem Fall ein Drehmoment und eine Dehnung. Alternativ können die Sensoren kontinuierlich Werte aufzeichnen.

Die Werte werden an eine Speichereinrichtung gesendet und zusammen mit dem Datum und der Zeit gespeichert. Das Speichern ist optional und vor allem für eine spätere Auswertung relevant. In diesem Fall ist die Speichereinrichtung an dem Verteilergestänge 6 befestigt, so dass die Werte auch im Nachhinein dem richtigen Verteilergestänge zugeordnet werden können.

Es kann auch ein Wert mit abgespeichert werden, der die Werte dem Verteilergestänge 6 zuordnet, so dass die Speichereinrichtung nicht nur für ein einziges Verteilergestänge genutzt werden kann. Das Speichern kann wegfallen, beispielsweise wenn nur eine unmittelbare Rückmeldung an den Fahrer vorgesehen ist.

Außerdem werden die Werte an eine Datenverarbeitungseinrichtung gesendet, die auf die Speichereinrichtung zugreift und eine Summe bereits gespeicherter Werte und neue Werte für die mechanische Belastung addiert und als neue Summe in der Speichereinrichtung abspeichert. Dies dient dazu, einen aktuellen Verschleißzustand abschätzen zu können und ist optional.

Zudem werden die Werte für die mechanische Belastung mit einem im Speicher hinterlegten Grenzwert verglichen und bei Überschreiten des Grenzwerts wird ein Warnsignal erzeugt, das an die Ausgabeeinrichtung gesendet wird.

Sofern keine Verarbeitung der Werte für die mechanische Belastung erforderlich ist, können die Werte vom Sensor direkt an eine Ausgabeeinrichtung abgegeben werden.

Die Ausgabeeinrichtung zeigt die gemessenen Werte auf einer Skala an, auf der ein kritischer Bereich markiert sein kann. Eine solche Skala kann ähnlich wie bei einer Drehzahlanzeige ausgebildet sein. Wenn die Ausgabeeinrichtung das Warnsignal empfängt, wird zudem aus einem Lautsprecher ein Warnton ausgegeben und eine Warnleuchte leuchtet oder blinkt in einer Signalfarbe, beispielsweise gelb, rot oder orange. Wenn die Werte für die mechanische Belastung wieder unter den Grenzwert fallen werden der Warnton und die Warnleuchte abgeschaltet.

Es ist auch möglich, dass nicht alle de oben genannten Ausgabeschritte erfolgen, also beispielsweise nur die Anzeige auf einer Skala oder nur das Ausgeben mittels eines Warntons oder einer Warnleuchte oder eine beliebige Kombination erfolgt. Auch andere Ausgabemöglichkeiten sind alternativ oder zusätzlich möglich.

## Patentansprüche

1. Feldspritze (1) mit einem Verteilergestänge (6) und einen Rahmen (5), an dem das Verteilergestänge (6) bewegbar aufgehängt ist,
aufweisend einen Sensor (11, 12, 13, 14, 15, 16) zum Bestimmen und Abgeben eines Werts für die mechanische Belastung auf das Verteilergestänge (6) und eine Ausgabeeinrichtung (17) zum Ausgeben eines Signals, das auf dem Wert für die mechanische Belastung basiert,
**dadurch gekennzeichnet, dass** die Ausgabeeinrichtung (17) zum optischen und/oder akustischen Ausgeben des Signals und/oder zum Ausgeben des Signals mittels Vibration ausgebildet ist, und insbesondere einen Bildschirm, eine Leuchteinrichtung, einen Lautsprecher und/oder ein Vibrationselement umfasst.

2. Feldspritze (1) nach Anspruch 1, wobei die Datenübermittlung zwischen dem Sensor (11, 12, 13, 14, 15, 16) und der Ausgabeeinrichtung (17) drahtgebunden oder drahtlos erfolgt.

3. Feldspritze (1) nach Anspruch 1 oder 2, mit einer Speichereinrichtung zum Speichern des Werts für die mechanische Belastung.

4. Feldspritze (1) nach einem der vorangegangenen Ansprüche, umfassend eine Datenverarbeitungseinrichtung, mit der der Sensor (11, 12, 13, 14, 15, 16) drahtlos und/oder drahtgebunden verbunden ist, zum Berechnen des Werts für die mechanische Belastung aus Messwerten des Sensors (11, 12, 13, 14, 15, 16) und/oder zum Addieren mit bereits bestehenden Werten für die mechanische Belastung und/oder zum Vergleichen von Werten für die mechanische Belastung mit einem Grenzwert für die mechanische Belastung und/oder mit bereits bestehenden Werten für die mechanische Belastung.

5. Feldspritze (1) nach einem der vorangegangenen Ansprüche, wobei der Sensor (11, 12, 13, 14, 15, 16) einen oder mehrere der folgenden Sensoren umfasst: einen Wegsensor, einen Beschleunigungssensor (15), einen Dehnungssensor (12), einen Drehmomentsensor (11), einen Drehratensensor, einen Drucksensor (13), einen Füllstandssensor, einen Geschwindigkeitssensor, einen Kraftsensor (14), einen Lagesensor, einen Winkelsensor und einen Lenkwinkelsensor (16).

6. Verfahren zum Betreiben einer Feldspritze (1), aufweisend das Bestimmen und Abgeben des Wertes für die mechanische Belastung auf das Verteilergestänge (6) der Feldspritze (1) mittels eines Sensors (11, 12, 13, 14, 15, 16), insbesondere kontinuierlich oder in vorgegebenen Zeitintervallen, und das Ausgeben eines Signals das auf dem Wert für die mechanische Belastung basiert, insbesondere bei Überbelastung, **dadurch gekennzeichnet, dass** das Signal für die mechanische Belastung optisch und/oder akustisch und/oder mittels Vibration ausgegeben wird.

7. Verfahren nach Anspruch 6, wobei das Signal drahtgebunden und/oder drahtlos an eine Ausgabeeinrichtung (17) abgegeben wird.

8. Verfahren nach Anspruch 6 oder Anspruch 7, wobei zum Bestimmen des Werts für die mechanische Belastung aus verschiedenen Messgrößen ein Gesamtwert für die mechanische Belastung berechnet wird und/oder aus mehreren aufeinanderfolgenden Messwerten ein Gesamtwert und/oder ein Mittelwert für die mechanische Belastung berechnet werden.

9. Verfahren nach einem der Ansprüche 6 bis 8, wobei das Signal basierend auf einem Vergleich des Werts für die mechanische Belastung mit bestehenden Werten für die mechanische Belastung und/oder basierend auf einem Vergleich des Werts für die mechanische Belastung mit einem Grenzwert ausgegeben wird, insbesondere dann, wenn die mechanische Belastung einen Grenzwert überschreitet.

10. Verfahren nach einem der Ansprüche 6 bis 9, wobei der Wert für die mechanische Belastung gespeichert wird, vorzugsweise zusammen mit zuvor gemessenen Werten für die mechanische Belastung, insbesondere als Summe aller gemessenen Werte für die mechanische Belastung.

11. Verfahren nach einem der Ansprüche 6 bis 10, wobei die Messwerte eine oder mehrere der folgenden Messgrößen umfassen: Verschiebung, Beschleunigung, Dehnung, Drehmoment, Drehrate, Druck, Füllstand, Geschwindigkeit, Kraft, Lage, Winkel und Lenkwinkel.

12. Verfahren nach einem der Ansprüche 6 bis 11, wobei die Signalstärke mit zunehmender mechanischer Belastung zunimmt und/oder der Wert der mechanischen Belastung absolut und/oder auf einer Skala angezeigt wird.

## Claims

1. Field sprayer (1) having a distributor linkage (6) and a frame (5) from which the distributor linkage (6) is suspended in a movable fashion, having a sensor (11, 12, 13, 14, 15, 16) for determining and outputting a value of the mechanical loading on the distributor linkage (6), and an output device (17) for outputting a signal which is based on the value of the mechanical loading, **characterized in that** the output device (17) is designed to output the signal visually and/or acoustically and/or to output the signal by means of vibration, and comprises in particular a screen, a lighting device, a loudspeaker and/or a vibration element.

2. Field sprayer (1) according to Claim 1, wherein the transmission of data between the sensor (11, 12, 13, 14, 15, 16) and the output device (17) takes place in a wire-bound or wireless fashion.

3. Field sprayer (1) according to Claim 1 or 2, having a storage device for storing the value of the mechanical loading.

4. Field sprayer (1) according to one of the preceding claims, comprising a data processing device to which the sensor (11, 12, 13, 14, 15, 16) is connected in a wireless and/or wire-bound fashion, in order to calculate the value of the mechanical loading from measured values of the sensor (11, 12, 13, 14, 15, 16) and/or in order to add said value to already existing values of the mechanical loading and/or in order to compare values of the mechanical loading with a limiting value of the mechanical loading and/or with already existing values of the mechanical loading.

5. Field sprayer (1) according to one of the preceding claims, wherein the sensor (11, 12, 13, 14, 15, 16) comprises one or more of the following sensors: a travel sensor, an acceleration sensor (15), a strain sensor (12), a torque sensor (11), a rotational speed sensor, a pressure sensor (13), a filling level sensor, a speed sensor, a force sensor (14), a position sensor, an angle sensor and a steering angle sensor (16).

6. Method for operating a field sprayer (1), comprising determining and outputting the value of the mechanical loading to the distributor linkage (6) of the field sprayer (1) by means of a sensor (11, 12, 13, 14, 15, 16), in particular continuously or at predefined time intervals, and outputting a signal which is based on the value of the mechanical loading, in particular in the case of overloading, **characterized in that** the signal for the mechanical loading is output visually and/or acoustically and/or by means of vibration.

7. Method according to Claim 6, wherein the signal is output to an output device (17) in a wire-bound and/or wireless fashion.

8. Method according to Claim 6 or Claim 7, wherein in order to determine the value of the mechanical loading a total value of the mechanical loading is calculated from various measurement variables, and/or a total value and/or an average value of the mechanical loading is calculated from a plurality of successive measured values.

9. Method according to one of Claims 6 to 8, wherein the signal is output on the basis of a comparison of the value of the mechanical loading with existing values of the mechanical loading and/or on the basis of a comparison of the value of the mechanical loading with a limiting value, in particular when the mechanical loading exceeds a limiting value.

10. Method according to one of Claims 6 to 9, wherein the value of the mechanical loading is stored, preferably together with previously measured values of the mechanical loading, in particular as a total of all the measured values of the mechanical loading.

11. Method according to one of Claims 6 to 10, wherein the measured values comprise one or more of the following measurement variables: movement, acceleration, strain, torque, rotational speed, pressure, filling level, speed, force, position, angle and steering angle.

12. Method according to one of Claims 6 to 11, wherein the signal strength increases as the mechanical loading increases, and/or the value of the mechanical loading is displayed in absolute terms and/or on a scale.

## Revendications

1. Pulvérisateur agricole (1) comprenant une rampe de distribution (6) et un cadre (5) auquel la rampe de distribution (6) est suspendue de manière mobile, le pulvérisateur agricole comportant
un capteur (11, 12, 13, 14, 15, 16) destiné à déterminer la charge mécanique sur la rampe de distribution (6) et délivrer une valeur de celle-ci et un dispositif de sortie (17) destiné à délivrer un signal basé sur la valeur de la charge mécanique, **caractérisé en ce que**
le dispositif de sortie (17) est conçu pour délivrer le signal par des moyens optiques et/ou acoustiques et/ou pour délivrer le signal au moyen de vibrations, et comprend en particulier un écran, un dispositif d'éclairage, un haut-parleur et/ou un élément vibrant.

2. Pulvérisateur agricole (1) selon la revendication 1,
la transmission de données entre le capteur (11, 12, 13, 14, 15, 16) et le dispositif de sortie (17) s'effectuant par voie filaire ou sans fil.

3. Pulvérisateur agricole (1) selon la revendication 1 ou 2, comprenant un dispositif de mémorisation destiné à mémoriser la valeur de la charge mécanique.

4. Pulvérisateur agricole (1) selon l'une des revendications précédentes, comprenant un dispositif de traitement de données auquel le capteur (11, 12, 13, 14, 15, 16) est relié sans fil et/ou par voie filaire et qui est destiné à calculer la valeur de la charge mécanique à partir de valeurs mesurées du capteur (11, 12, 13, 14, 15, 16) et/ou à l'additionner à des valeurs déjà existantes de la charge mécanique et/ou à comparer des valeurs de la charge mécanique à une valeur limite de la charge mécanique et/ou à des valeurs existantes de la charge mécanique.

5. Pulvérisateur agricole (1) selon l'une des revendications précédentes, le capteur (11, 12, 13, 14, 15, 16) comprenant un ou plusieurs des capteurs suivants : un capteur de déplacement, un capteur d'accélération (15), un capteur d'allongement (12), un capteur de couple (11), un capteur de vitesse de rotation, un capteur de pression (13), un capteur de niveau, un capteur de vitesse, un capteur de force (14), un capteur de position, un capteur d'angle et un capteur d'angle de braquage (16).

6. Procédé de fonctionnement d'un pulvérisateur agricole (1), comportant les étapes suivantes déterminer et délivrer la valeur de la charge mécanique sur la rampe de distribution (6) du pulvérisateur agricole (1) au moyen d'un capteur (11, 12, 13, 14, 15, 16), en particulier en continu ou à intervalles de temps spécifiés, et émettre un signal basé sur la valeur de la charge mécanique, notamment en cas de surcharge, **caractérisé en ce que**
le signal de la charge mécanique est émis par des moyens optiques et/ou acoustiques et/ou vibratoires.

7. Procédé selon la revendication 6, le signal étant délivré à un dispositif de sortie (17) par voie filaire et/ou sans fil.

8. Procédé selon la revendication 6 ou la revendication 7, une valeur totale de la charge mécanique étant calculée pour déterminer la valeur de la charge mécanique à partir de diverses grandeurs de mesure et/ou une valeur totale et/ou une valeur moyenne de la charge mécanique étant calculées à partir de plusieurs valeurs de mesure successives.

9. Procédé selon l'une des revendications 6 à 8, le signal étant émis sur la base d'une comparaison de la valeur de la charge mécanique avec des valeurs existantes de la charge mécanique et/ou sur la base d'une comparaison de la valeur de la charge mécanique avec une valeur limite, en particulier lorsque la charge mécanique dépasse une valeur limite.

10. Procédé selon l'une des revendications 6 à 9, la valeur de la charge mécanique étant mémorisée, de préférence conjointement avec des valeurs précédemment mesurées de la charge mécanique, en particulier sous la forme d'une somme de toutes les valeurs mesurées de la charge mécanique.

11. Procédé selon l'une des revendications 6 à 10, les valeurs mesurées comprenant une ou plusieurs des grandeurs de mesure suivantes : déplacement, accélération, allongement, couple, vitesse de rotation, pression, niveau, vitesse, force, position, angle et angle de braquage.

12. Procédé selon l'une des revendications 6 à 11, l'intensité du signal augmentant à mesure que la charge mécanique augmente et/ou la valeur de la charge mécanique étant affichée de manière absolue et/ou sur une échelle.
